# EUROPEAN PATENT APPLICATION

(11) **EP 4 311 237 A1**
(43) Date of publication of application: **24.01.2024**
(21) Application number: 22791585.7
(22) Date of filing: 31.03.2022
(51) Int. Cl.: H04N 19/17

(54) **IMAGE ENCODING METHOD, IMAGE DECODING METHOD, IMAGE PROCESSING METHOD, IMAGE ENCODING DEVICE, AND IMAGE DECODING DEVICE**

(30) Priority: 23.04.2021 US 202163178773 P
(71) Applicant: Panasonic Intellectual Property Corporation of America, Torrance, CA 90504 (US)
(72) Inventor: TEO, Han Boon, Singapore, 469332 (SG); LIM, Chong Soon, Singapore, 469332 (SG); WANG, Chu Tong, Singapore, 469332 (SG); TOMA, Tadamasa, Osaka 571-0057 (JP)
(74) Representative: Grünecker Patent- und Rechtsanwälte PartG mbB
(86) International application number: PCT/JP2022/016955
(87) International publication number: WO 2022/224810

(57) **Abstract**

The image encoding device uses a first encoding process to, on the basis of one or more parameters related to an object included in an image that are input from a first processing device that executes a prescribed task process on the basis of the image, encode a first region of the image where the object is included, uses a second encoding process to, on the basis of the one or more parameters, encode a second region of the image where the object is not included, generates a bitstream by means of the encoding of the first region and the second region, and transmits the generated bitstream to an image decoding device.

## Description

### Technical Field

The present disclosure relates to an image encoding method, an image decoding method, an image processing method, an image encoding device, and an image decoding device.

### Background Art

The neural network is a series of algorithms that attempt to recognize underlying relationships in a dataset via a process of imitating the processing method of the human brain. In this sense, the neural network refers to a system of neurons that is essentially organic or artificial. Different types of neural network in deep learning, for example, convolution neural network (CNN), recurrent neural network (RNN), and artificial neural network (ANN) will change the way we interact with the world. These different types of neural network will be the core of power applications such as the deep learning revolution, unmanned aerial vehicles, autonomous vehicles, and speech recognition. The CNN, which includes a plurality of stacked layers, is a class of deep neural network most commonly applied to the analysis of visual images.

Edge artificial intelligence (edge AI) is a system that uses machine learning algorithm to process data generated by hardware sensors at the local level. The system does not need to be connected to the Internet in order to process such data and make a determination in real time. In other words, edge AI brings data and processing of the data to the point of contact closest to the user, whether edge AI is a computer, an IoT device, or an edge server. For example, in a surveillance camera system setup, the camera system can be developed by using edge Al, which includes simple neural networks. Edge AI may be disposed to execute simple task analysis that requires real-time results. The camera system typically includes a video/audio codec as well. The video/audio codec compresses video/audio for efficient transmission to a server for recording. To execute complex task analysis, a separate neural network may be disposed on the cloud or server.

The image encoding system architecture according to the background art is disclosed, for example, in Patent Literatures 1 and 2.

### Citation List

### Patent Literature

Patent Literature 1: US Patent Publication No. 2010/0046635
Patent Literature 2: US Patent Publication No. 2021/0027470

### Summary of Invention

An object of the present disclosure is to improve accuracy of the task process.

An image encoding method according to one aspect of the present disclosure includes, by an image encoding device: encoding a first region of an image including an object by a first encoding process on a basis of one or more parameters about the object included in the image, the parameters being input from a first processing device that executes a prescribed task process on a basis of the image; encoding a second region of the image that does not include the object by a second encoding process on a basis of the one or more parameters; generating a bitstream by encoding the first region and the second region; and transmitting the generated bitstream to an image decoding device.

### Brief Description of Drawings

FIG. 1 is a flowchart showing a processing procedure of an image decoding method according to an embodiment of the present disclosure.
FIG. 2 is a flowchart showing a processing procedure of an image encoding method according to the embodiment of the present disclosure.
FIG. 3 is a diagram showing a configuration example of an image processing system according to the background art.
FIG. 4 is a diagram showing a configuration example of an image processing system according to the embodiment of the present disclosure.
FIG. 5 is a block diagram showing a configuration example of an image decoding device according to the embodiment of the present disclosure.
FIG. 6 is a block diagram showing a configuration example of an image encoding device according to the embodiment of the present disclosure.
FIG. 7 is a block diagram showing the configuration example of the image decoding device according to the embodiment of the present disclosure.
FIG. 8 is a block diagram showing the configuration example of the image encoding device according to the embodiment of the present disclosure.
FIG. 9 is a block diagram showing the configuration example of the image decoding device according to the embodiment of the present disclosure.
FIG. 10 is a block diagram showing the configuration example of the image encoding device according to the embodiment of the present disclosure.
FIG. 11 is a block diagram showing the configuration example of the image decoding device according to the embodiment of the present disclosure.
FIG. 12 is a block diagram showing the configuration example of the image encoding device according to the embodiment of the present disclosure.
FIG. 13 is a diagram showing one example of attribute table information for setting category information.
FIG. 14 is a diagram showing one example of feature table information for setting feature information.
FIG. 15 is a diagram showing an example of a first region and a second region.
FIG. 16 is a diagram showing an example of the first region and the second region.
FIG. 17 is a diagram showing a setting example of a quantization parameter.
FIG. 18 is a diagram showing a setting example of a filter process.
FIG. 19 is a diagram showing a setting example of a prediction process.
FIG. 20 is a diagram showing the setting example of the prediction process.
FIG. 21 is a diagram showing a setting example of a context model.
FIG. 22 is a diagram showing one example of a neural network task.
FIG. 23 is a diagram showing one example of the neural network task.
FIG. 24 is a diagram showing an example of filter strength.
FIG. 25 is a diagram showing an example of filter tap length.

### Description of Embodiments

### (Knowledge Underlying the Present Disclosure)

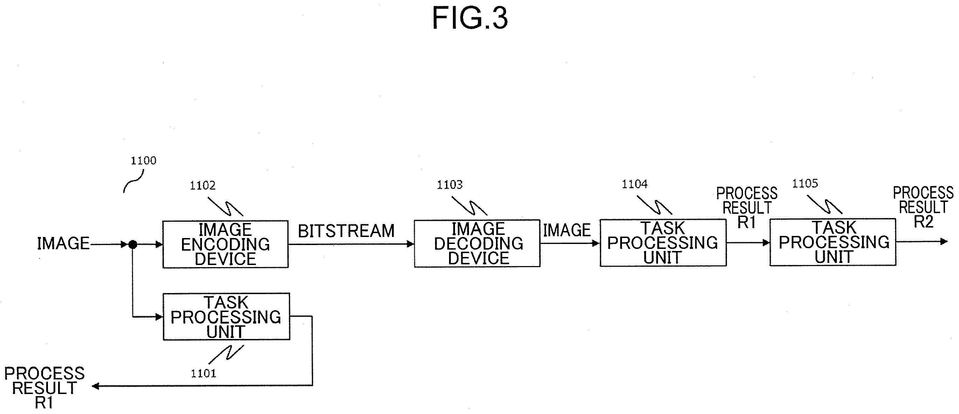

FIG. 3 is a diagram showing a configuration example of an image processing system 1100 according to the background art. An image encoding device 1102 inputs an image captured by a camera and encodes the image, thereby outputting a compressed bitstream. The bitstream is transmitted from the image encoding device 1102 to an image decoding device 1103 via a communication network.

On the encoder side, the image captured by the camera is also input into a task processing unit 1101. The task processing unit 1101 executes a prescribed neural network task on the basis of the input image. The task processing unit 1101 executes, for example, a face detection process for detecting a person's face included in the image. A process result R1 of the task process by the task processing unit 1101 (boundary box of detected face) is fed back to an image capturing device.

The image decoding device 1103 receives the bitstream transmitted from the image encoding device 1102 and decodes the bitstream, thereby inputting the extended image into a task processing unit 1104. The task processing unit 1104 executes the same neural network task as the task processing unit 1101 (face detection process in this example) on the basis of the input image.

The process result R1 of the task process by the task processing unit 1104 (boundary box of the detected face) is input into a task processing unit 1105. The task processing unit 1105 executes a prescribed neural network task on the basis of the input process result R1. The task processing unit 1105 executes, for example, a person identification process to identify a person on the basis of the person's face included in the image, and outputs a process result R2.

The problem of the background art shown in FIG. 3 is that the same task process is executed redundantly by the task processing unit 1101 on the encoder side and the task processing unit 1104 on the decoder side.

To solve such a problem, the present inventor has introduced a new method of signalizing the neural network output of the previous stage. The concept is to use information from the neural network of the previous stage to hold important data of the image to transmit to the neural network of the subsequent stage. By using this information, it is possible to further reduce the size of the encoded bitstream and to improve the accuracy of determination in the task process of the neural network of the subsequent stage.

Next, each aspect of the present disclosure will be described.

An image encoding method according to one aspect of the present disclosure includes, by an image encoding device: encoding a first region of an image including an object by a first encoding process on a basis of one or more parameters about the object included in the image, the parameters being input from a first processing device that executes a prescribed task process on a basis of the image; encoding a second region of the image that does not include the object by a second encoding process on a basis of the one or more parameters; generating a bitstream by encoding the first region and the second region; and transmitting the generated bitstream to an image decoding device.

According to the present aspect, on the basis of the one or more parameters input from the first processing device, the image encoding device encodes the first region including the object by the first encoding process, and encodes the second region that does not include the object by the second encoding process. With this configuration, the image encoding device can set the first encoding process and the second encoding process such that the first region has higher image quality or higher resolution than the second region, and the image decoding device can output, to the second processing device, an image in which the first region has higher image quality or higher resolution than the second region. As a result, it is possible to improve accuracy of the task process in the second processing device.

In the above-described aspect, the image encoding device adds the one or more parameters to the bitstream and transmits the bitstream to the image decoding device.

According to the present aspect, the image decoding device can output the one or more parameters received from the image encoding device to the second processing device. As a result, the second processing device executes the prescribed task process on the basis of the one or more parameters input from the image decoding device, thereby making it possible to further improve accuracy of the task process in the second processing device.

In the above-described aspect, the image encoding device further adds, to the bitstream, control information indicating whether the one or more parameters are added to the bitstream, and transmits the bitstream to the image decoding device.

According to the present aspect, by confirming whether the control information is added to the received bitstream, the image decoding device can easily determine whether the one or more parameters are added to the bitstream.

In the above-described aspect, the image decoding device receives the bitstream from the image encoding device, acquires the one or more parameters from the received bitstream, and decodes the first region by a first decoding process and decodes the second region by a second decoding process on the basis of the acquired one or more parameters.

According to the present aspect, on the basis of the one or more parameters acquired from the received bitstream, the image decoding device decodes the first region including the object by the first decoding process, and decodes the second region that does not include the object by the second decoding process. This allows the image decoding device to set the first decoding process and the second decoding process such that the first region has higher image quality or higher resolution than the second region, and to output, to the second processing device, an image in which the first region has higher image quality or higher resolution than the second region. As a result, it is possible to improve accuracy of the task process in the second processing device.

In the above-described aspect, the image decoding device outputs the acquired one or more parameters to a second processing device that executes a prescribed task process.

According to the present aspect, the second processing device executes the prescribed task process on the basis of the one or more parameters input from the image decoding device, thereby making it possible to further improve accuracy of the task process in the second processing device.

In the above-described aspect, the first encoding process and the second encoding process include at least one of a quantization process, a filtering process, an intra prediction process, an inter prediction process, and an arithmetic encoding process.

According to the present aspect, the first encoding process and the second encoding process include at least one of the quantization process, the filtering process, the intra prediction process, the inter prediction process, and the arithmetic encoding process, thereby making it possible to set the first encoding process and the second encoding process such that the first region has higher image quality or higher resolution than the second region.

In the above-described aspect, the image encoding device sets the first encoding process and the second encoding process such that the first region has higher image quality or higher resolution than the second region.

According to the present aspect, the image encoding device can transmit, to the image decoding device, an image in which the first region has higher image quality or higher resolution than the second region, and the image decoding device can output, to the second processing device, the image in which the first region has higher image quality or higher resolution than the second region. As a result, it is possible to improve accuracy of the task process in the second processing device.

In the above-described aspect, the first encoding process and the second encoding process include the quantization process, and the image encoding device sets a value of a first quantization parameter about the first encoding process to be smaller than a value of a second quantization parameter about the second encoding process.

According to the present aspect, it is possible to obtain an image in which the first region has higher image quality or higher resolution than the second region, by setting the value of the first quantization parameter about the first encoding process to be smaller than the value of the second quantization parameter about the second encoding process.

In the above-described aspect, the one or more parameters include at least one of a trust level value of a neural network task that is the prescribed task process, a counter value indicating the number of the object included in the image, category information indicating an attribute of the object included in the image, feature information indicating a feature of the object included in the image, and boundary information indicating a boundary surrounding the object included in the image.

According to the present aspect, the one or more parameters include at least one of the trust level value of the neural network task, the counter value, the category information, the feature information, and the boundary information about the object included in the image. Therefore, the accuracy of the task process can be improved by the second processing device executing the prescribed task process on the basis of the one or more parameters.

An image decoding method according to one aspect of the present disclosure includes, by an image decoding device: receiving a bitstream from an image encoding device; acquiring one or more parameters about an object included in an image from the bitstream; and decoding a first region of the image including the object by a first decoding process, and decoding a second region of the image that does not include the object by a second decoding process on the basis of the acquired one or more parameters.

According to the present aspect, on the basis of the one or more parameters acquired from the received bitstream, the image decoding device decodes the first region including the object by the first decoding process, and decodes the second region that does not include the object by the second decoding process. This allows the image decoding device to set the first decoding process and the second decoding process such that the first region has higher image quality or higher resolution than the second region, and to output, to the second processing device, an image in which the first region has higher image quality or higher resolution than the second region. As a result, it is possible to improve accuracy of the task process in the second processing device.

An image processing method according to one aspect of the present disclosure includes, by an image decoding device: receiving, from an image encoding device, a bitstream including an encoded image and one or more parameters about an object included in the image; acquiring the one or more parameters from the received bitstream; and decoding a first region of the image including the object by a first decoding process, and decoding a second region of the image that does not include the object by a second decoding process on the basis of the acquired one or more parameters.

According to the present aspect, on the basis of the one or more parameters acquired from the received bitstream, the image decoding device decodes the first region including the object by the first decoding process, and decodes the second region that does not include the object by the second decoding process. This allows the image decoding device to set the first decoding process and the second decoding process such that the first region has higher image quality or higher resolution than the second region, and to output, to the second processing device, an image in which the first region has higher image quality or higher resolution than the second region. As a result, it is possible to improve accuracy of the task process in the second processing device.

An image encoding device according to one aspect of the present disclosure is configured to: encode a first region of an image including an object by a first encoding process on the basis of one or more parameters about the object included in the image, the parameters being input from a first processing device that executes a prescribed task process on the basis of the image; encode a second region of the image that does not include the object by a second encoding process on the basis of the one or more parameters; generate a bitstream by encoding the first region and the second region; and transmit the generated bitstream to an image decoding device.

According to the present aspect, on the basis of the one or more parameters input from the first processing device, the image encoding device encodes the first region including the object by the first encoding process, and encodes the second region that does not include the object by the second encoding process. With this configuration, the image encoding device can set the first encoding process and the second encoding process such that the first region has higher image quality or higher resolution than the second region, and the image decoding device can output, to the second processing device, an image in which the first region has higher image quality or higher resolution than the second region. As a result, it is possible to improve accuracy of the task process in the second processing device.

An image decoding device according to one aspect of the present disclosure is configured to: receive a bitstream from an image encoding device; acquire one or more parameters about an object included in an image from the bitstream; and decode a first region of the image including the object by a first decoding process, and decode a second region of the image that does not include the object by a second decoding process on the basis of the acquired one or more parameters.

According to the present aspect, on the basis of the one or more parameters acquired from the received bitstream, the image decoding device decodes the first region including the object by the first decoding process, and decodes the second region that does not include the object by the second decoding process. This allows the image decoding device to set the first decoding process and the second decoding process such that the first region has higher image quality or higher resolution than the second region, and to output, to the second processing device, an image in which the first region has higher image quality or higher resolution than the second region. As a result, it is possible to improve accuracy of the task process in the second processing device.

### (Embodiments of Present Disclosure)

Embodiments of the present disclosure will be described in detail below with reference to the drawings. Note that elements denoted by the same reference numerals in different drawings represent the same or corresponding elements.

Note that each of the embodiments described below shows one specific example of the present disclosure. Numerical values, shapes, components, steps, order of steps, and the like shown in the following embodiments are merely one example, and are not intended to limit the present disclosure. A component that is not described in an independent claim representing the highest concept among components in the embodiments below is described as an arbitrary component. In all the embodiments, respective contents can be combined.

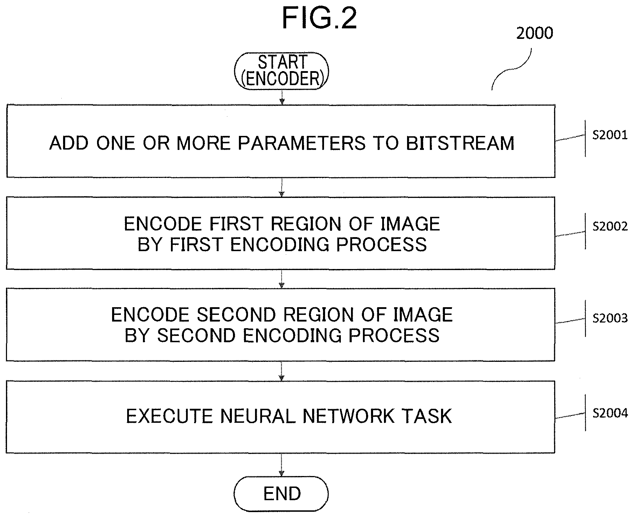

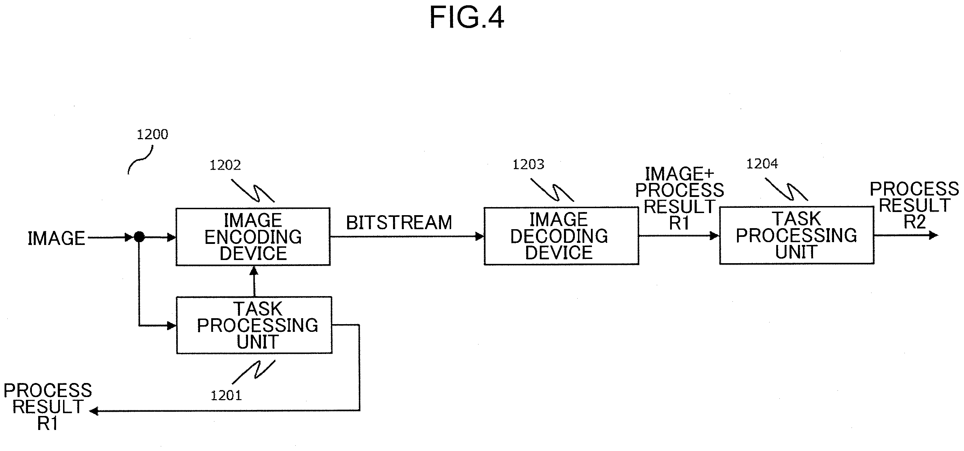

FIG. 4 is a diagram showing a configuration example of an image processing system 1200 according to the embodiment of the present disclosure. FIG. 2 is a flowchart showing a processing procedure 2000 of an image encoding method according to the embodiment of the present disclosure.

An image encoding device 1202 inputs an image captured by a camera and encodes the image, thereby outputting a compressed bitstream. The image captured by the camera is also input into a task processing unit 1201. The task processing unit 1201 executes the prescribed task process such as a neural network task on the basis of the input image. The task processing unit 1201 executes, for example, a face detection process for detecting a person's face included in the image. The process result R1 of the task process by the task processing unit 1201 (boundary box of detected face) is fed back to an image capturing device and input into the image encoding device 1202.

The process result R1 includes one or more parameters about an object included in the image. The one or more parameters include at least one of a trust level value of the neural network task, a counter value indicating the number of objects included in the image, category information indicating an attribute of the object included in the image, feature information indicating a feature of the object included in the image, and boundary information indicating a drawing of a boundary surrounding the object included in the image (bounding box).

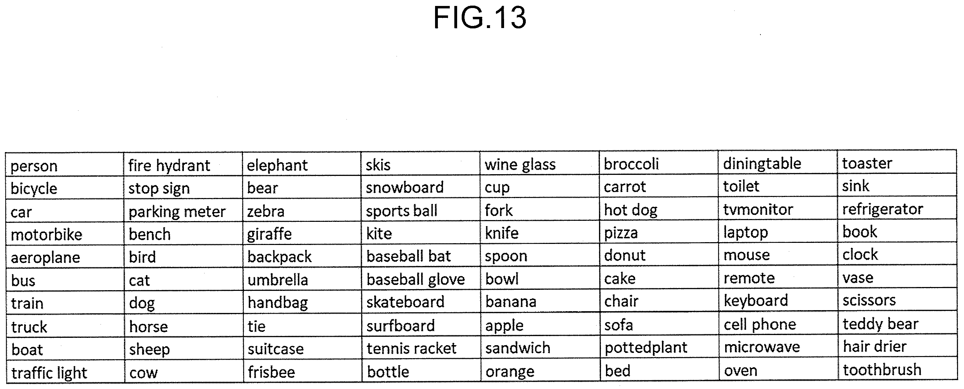

FIG. 13 is a diagram showing one example of attribute table information for setting the category information. The attribute table information describes various attributes about the object, such as person, bicycle, and car. The task processing unit 1201 selects the attribute of the object included in the image from the attribute table information and outputs the selected attribute as the category information about the object.

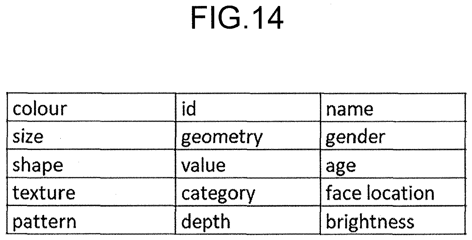

FIG. 14 is a diagram showing one example of feature table information for setting feature information. The feature table information describes various features about the object such as colour, size, and shape. The task processing unit 1201 sets the feature of the object included in the image on the basis of the feature table information and outputs the feature as the feature information about the object.

In step S2001, the image encoding device 1202 adds one or more parameters to the bitstream. The one or more parameters may be added to the bitstream by being encoded, and may be added to the bitstream by being stored in a header of the bitstream. The header may be VPS, SPS, PPS, PH, SH, or SEI. The image encoding device 1202 may further add control information such as flag information indicating whether one or more parameters are added to the bitstream to the header of the bitstream or the like.

The image encoding device 1202 encodes the image on the basis of one or more parameters included in the process result R1. The image encoding device 1202 encodes a first region of the image including the object by a first encoding process in step S2002, and encodes a second region of the image that does not include the object by a second encoding process in step S2003.

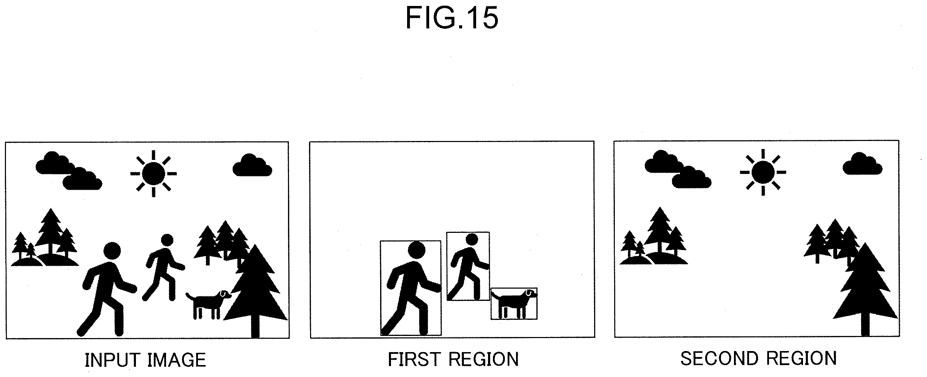

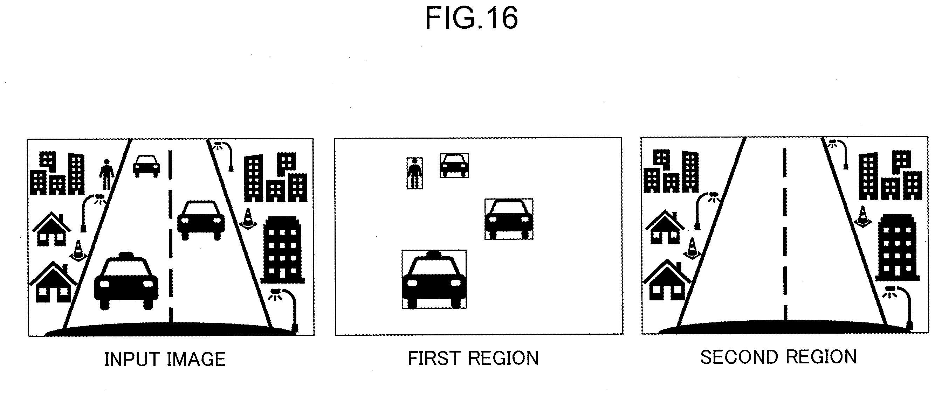

FIGS. 15 and 16 are diagrams showing an example of the first region and the second region. With reference to FIG. 15, out of the input image, the image encoding device 1202 sets the region including the object set with one or more parameters (person and animal in this example) as the first region, and sets the region that does not include the object as the second region. With reference to FIG. 16, out of the input image, the image encoding device 1202 sets the region including the object set with one or more parameters (car and person in this example) as the first region, and sets the region that does not include the object as the second region. In this way, by defining a plurality of regions in the same image, it is possible to switch the encoding process for each region.

The first encoding process and the second encoding process include at least one of a quantization process, a filtering process, an intra prediction process, an inter prediction process, and an arithmetic encoding process. The image encoding device 1202 sets the first encoding process and the second encoding process such that the first region has higher image quality or higher resolution than the second region. This makes it possible to appropriately reduce the amount of processing in encoding of the second region while encoding the first region including the object so as to have higher image quality or higher resolution.

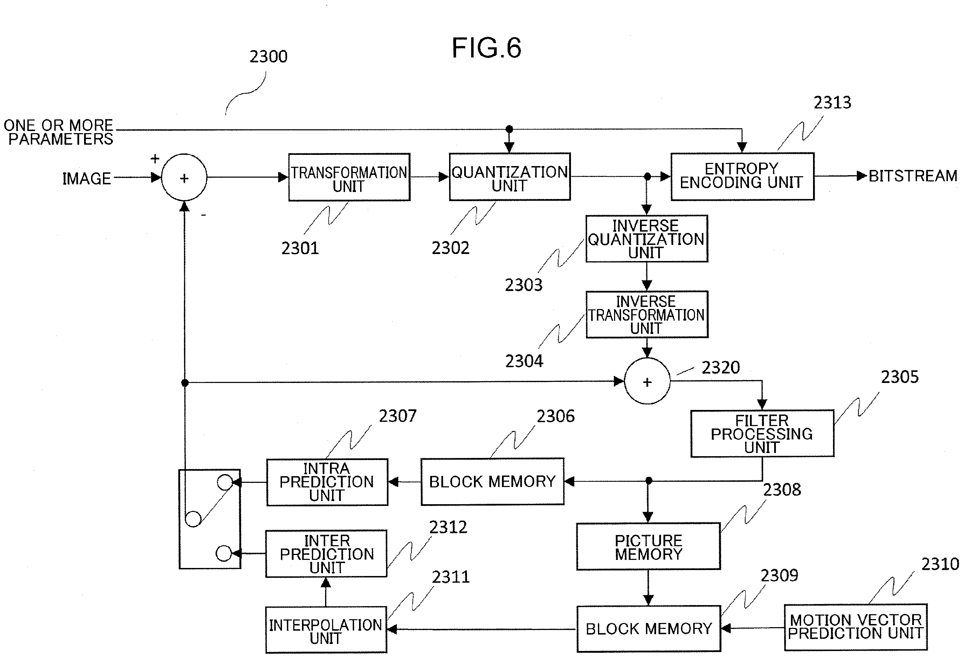

FIG. 6 is a block diagram showing a configuration example 2300 of the image encoding device 1202 according to the embodiment of the present disclosure. The image encoding device 1202 is configured to encode the input image block by block and output the encoded bitstream. As shown in FIG. 6, the image encoding device 1202 includes a transformation unit 2301, a quantization unit 2302, an inverse quantization unit 2303, an inverse transformation unit 2304, a filter processing unit 2305, a block memory 2306, an intra prediction unit 2307, a picture memory 2308, a block memory 2309, a motion vector prediction unit 2310, an interpolation unit 2311, an inter prediction unit 2312, and an entropy encoding unit 2313. In the configuration example 2300, one or more parameters are input into the quantization unit 2302 and the entropy encoding unit 2313.

Next, an exemplary operation flow will be described. An input image and a predicted image are input into an adder, and an additional value corresponding to a difference image between the input image and the predicted image is input from the adder to the transformation unit 2301. The transformation unit 2301 inputs a frequency coefficient obtained by transforming the additional value into the quantization unit 2302.

The quantization unit 2302 quantizes the input frequency coefficient, and inputs the quantized frequency coefficient into the inverse quantization unit 2303 and the entropy encoding unit 2313. For example, when the trust level of the object included in the first region is equal to or higher than the prescribed threshold, the quantization unit 2302 sets the quantization parameter with a value different from a value of the quantization parameter about the second region to the first region. As another example, when the trust level of the object included in the first region is less than the prescribed threshold, the quantization unit 2302 sets the quantization parameter with a value different from a value of the quantization parameter about the second region to the first region. As another example, when the counter value indicating the number of objects is equal to or higher than the prescribed threshold, the quantization unit 2302 sets the quantization parameter with a value different from a value of the quantization parameter about the second region to the first region. As another example, when the counter value indicating the number of objects is less than the prescribed threshold, the quantization unit 2302 sets the quantization parameter with a value different from a value of the quantization parameter about the second region to the first region. As another example, when the category or feature of the object is identical to the prescribed category or feature, the quantization unit 2302 sets the quantization parameter with a value different from a value of the quantization parameter about the second region to the first region. As another example, when the category or feature of the object is different from the prescribed category or feature, the quantization unit 2302 sets the quantization parameter with a value different from a value of the quantization parameter about the second region to the first region. As another example, when a boundary box exists, the quantization unit 2302 sets the quantization parameter with a value different from a value of the quantization parameter about the second region to the first region. As another example, when the boundary box does not exist, the quantization unit 2302 sets the quantization parameter with a value different from a value of the quantization parameter about the second region to the first region. The example of setting the quantization parameter is by adding a parameter indicating a setting value of the quantization parameter to the header together with the quantization parameter and selecting the quantization parameter.

For example, the quantization unit 2302 sets the value of the quantization parameter about the first region to be smaller than the value of the quantization parameter about the second region on the basis of the input one or more parameters. That is, the value of the first quantization parameter about the first encoding process is set smaller than the value of the second quantization parameter about the second encoding process.

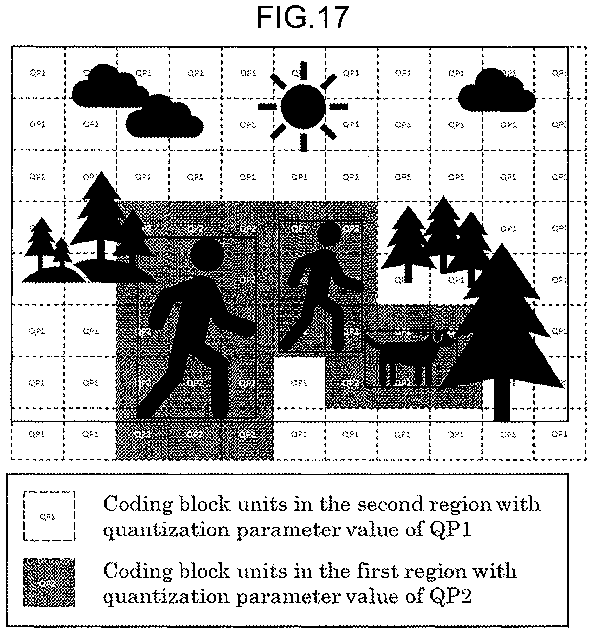

FIG. 17 is a diagram showing a setting example of the quantization parameter. The quantization unit 2302 sets a quantization parameter QP1 for the block corresponding to the second region of the image that does not include the object, and sets a quantization parameter QP2 smaller than the quantization parameter QP1 for the block corresponding to the first region of the image including the object.

The entropy encoding unit 2313 generates the bitstream by entropy encoding the quantized frequency coefficient. The entropy encoding unit 2313 adds one or more input parameters to the bitstream by entropy encoding the parameters together with the quantized frequency coefficient, or by storing the parameters in the header of the bitstream. The entropy encoding unit 2313 may further add the control information such as flag information indicating whether one or more parameters are added to the bitstream to the header of the bitstream or the like.

The inverse quantization unit 2303 inversely quantizes the frequency coefficient input from the quantization unit 2302, and inputs the frequency coefficient after the inverse quantization to the inverse transformation unit 2304. The inverse transformation unit 2304 generates the difference image by inversely transforming the frequency coefficient, and inputs the difference image into the adder. The adder adds the difference image input from the inverse transformation unit 2304 and the predicted image input from the intra prediction unit 2307 or the inter prediction unit 2312. The adder inputs an additional value 2320 corresponding to the input image into the filter processing unit 2305. The filter processing unit 2305 executes the prescribed filter process on the additional value 2320, and inputs the value after the filter process to the block memory 2306 and the picture memory 2308 for further prediction.

The intra prediction unit 2307 and the inter prediction unit 2312 search a reconstructed image stored in the block memory 2306 or the picture memory 2308 for an image region that is most similar to the input image for prediction. The block memory 2309 fetches the block of the reconstructed image from the picture memory 2308 by using a motion vector input from the motion vector prediction unit 2310. The block memory 2309 inputs the block of the reconstructed image into the interpolation unit 2311 for the interpolation process. The interpolated image is input from the interpolation unit 2311 into the inter prediction unit 2312 for the inter prediction process.

The image encoding device 1202 transmits the bitstream to which one or more parameters are added to the image decoding device 1203 via the communication network.

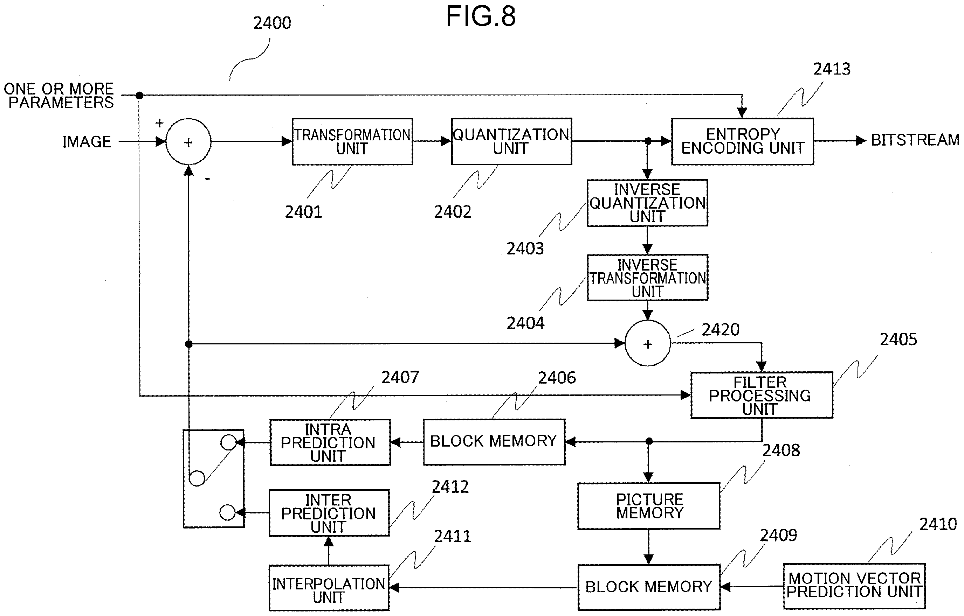

FIG. 8 is a block diagram showing a configuration example 2400 of the image encoding device 1202 according to the embodiment of the present disclosure. As shown in FIG. 8, the image encoding device 1202 includes a transformation unit 2401, a quantization unit 2402, an inverse quantization unit 2403, an inverse transformation unit 2404, a filter processing unit 2405, a block memory 2406, an intra prediction unit 2407, a picture memory 2408, a block memory 2409, a motion vector prediction unit 2410, an interpolation unit 2411, an inter prediction unit 2412, and an entropy encoding unit 2413. In the configuration example 2400, one or more parameters are input into the filter processing unit 2405 and the entropy encoding unit 2413.

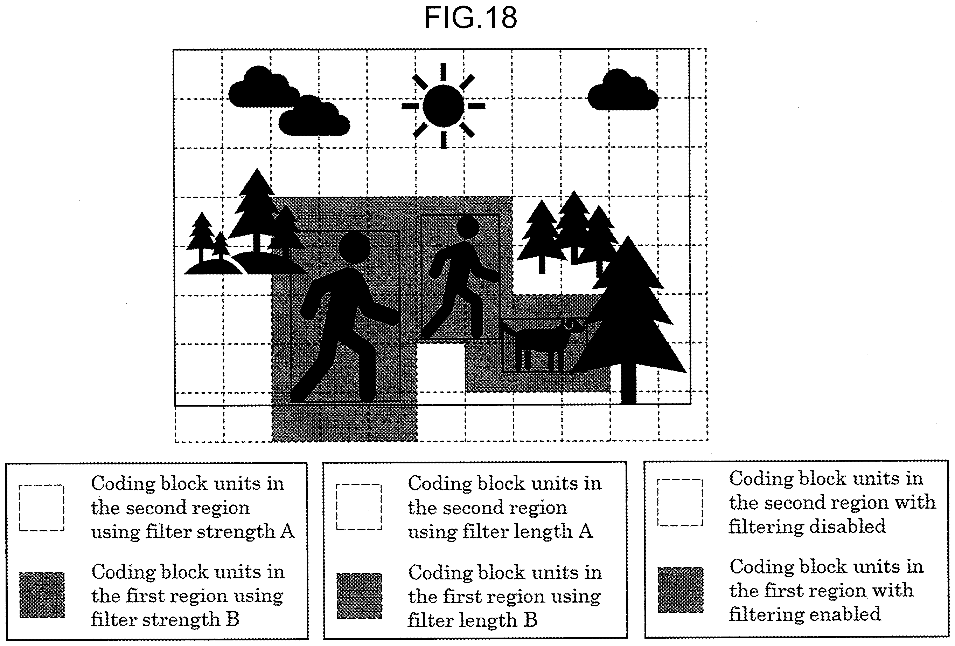

FIG. 18 is a diagram showing a setting example of the filter process. Examples of the filter process include a deblocking filter, an adaptive loop filter (ALF), a cross component adaptive loop filter (CCALF), a sample adaptive offset (SAO), or a luma mapping by chroma scaling (LMCS). The filter processing unit 2405 sets the filter strength, the filter length, or enabling/disabling the filter process on the basis of the one or more input parameters.

The filter processing unit 2405 sets the filter strength A for the block corresponding to the second region of the image that does not include the object, and sets the filter strength B for the block corresponding to the first region of the image that includes the object. Alternatively, the filter processing unit 2405 sets the filter length A for the block corresponding to the second region, and sets the filter length B for the block corresponding to the first region. Alternatively, the filter processing unit 2405 disables the filter process for the block corresponding to the second region, and enables the filter process for the block corresponding to the first region. For example, if the adaptive loop filter is more effective in reducing the difference between the decoded image and the original image as the filter length increases, the filter length of the first region is increased with respect to the second region. If the block distortion suppressing effect of the deblocking filter increases as the filter length increases, the filter length of the first region may be increased with respect to the filter length of the second region.

For example, when the trust level of the object included in the first region is equal to or higher than the prescribed threshold, the filter processing unit 2405 applies, to the first region, settings different from settings of the filter strength, the filter length, or enabling/disabling the filter process about the second region. As another example, when the trust level of the object included in the first region is less than the prescribed threshold, the filter processing unit 2405 applies, to the first region, settings different from settings of the filter strength, the filter length, or enabling/disabling the filter process about the second region. As another example, when the counter value indicating the number of objects is equal to or greater than the prescribed threshold, the filter processing unit 2405 applies, to the first region, settings different from settings of the filter strength, the filter length, or enabling/disabling the filter process about the second region. As another example, when the counter value indicating the number of objects is less than the prescribed threshold, the filter processing unit 2405 applies, to the first region, settings different from settings of the filter strength, the filter length, or enabling/disabling the filter process about the second region. As another example, when the category or feature of the object is the same as the prescribed category or feature, the filter processing unit 2405 applies, to the first region, settings different from settings of the filter strength, the filter length, or enabling/disabling the filter process about the second region. As another example, when the category or feature of the object differs from the prescribed category or feature, the filter processing unit 2405 applies, to the first region, settings different from settings of the filter strength, the filter length, or enabling/disabling the filter process about the second region. As another example, when the boundary box exists, the filter processing unit 2405 applies, to the first region, settings different from settings of the filter strength, the filter length, or enabling/disabling the filter process about the second region. As another example, when the boundary box does not exist, the filter processing unit 2405 applies, to the first region, settings different from settings of the filter strength, the filter length, or enabling/disabling the filter process about the second region.

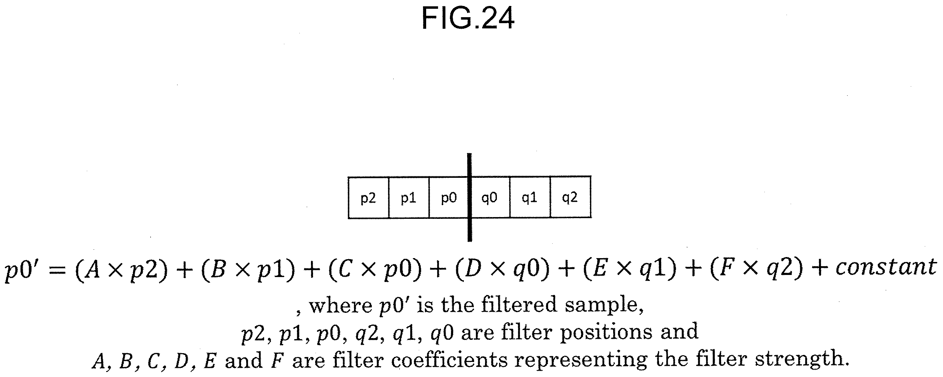

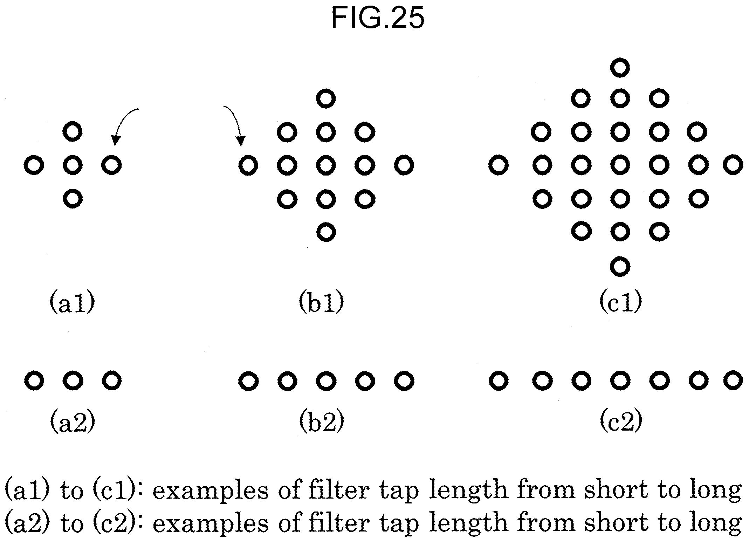

FIG. 24 is a diagram showing an example of filter strength, and FIG. 25 is a diagram showing an example of filter tap length. The filter processing unit 2405 can set the filter strength with the filter coefficient, and can set the filter length with the number of filter taps.

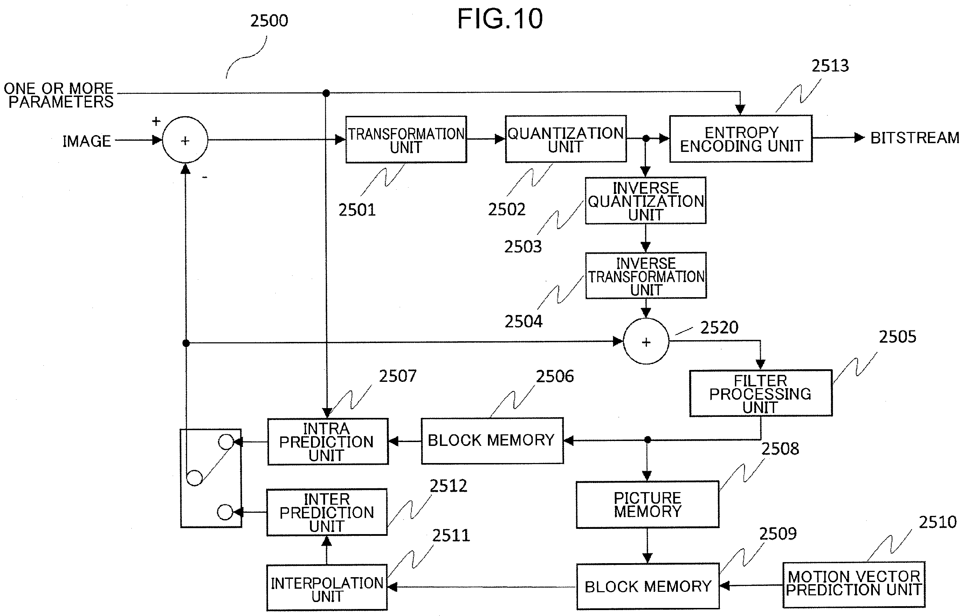

FIG. 10 is a block diagram showing a configuration example 2500 of the image encoding device 1202 according to the embodiment of the present disclosure. As shown in FIG. 10, the image encoding device 1202 includes a transformation unit 2501, a quantization unit 2502, an inverse quantization unit 2503, an inverse transformation unit 2504, a filter processing unit 2505, a block memory 2506, an intra prediction unit 2507, a picture memory 2508, a block memory 2509, a motion vector prediction unit 2510, an interpolation unit 2511, an inter prediction unit 2512, and an entropy encoding unit 2513. In the configuration example 2500, one or more parameters are input into the intra prediction unit 2507 and the entropy encoding unit 2413.

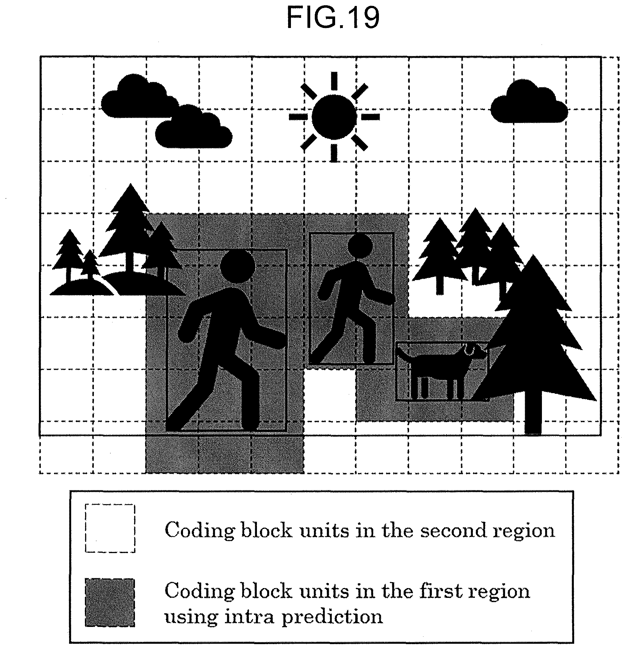

FIG. 19 is a diagram showing a setting example of the prediction process. On the basis of one or more input parameters, the intra prediction unit 2507 does not execute the prediction process on the block corresponding to the second region of the image that does not include the object, and executes the intra prediction process on the block corresponding to the first region of the image including the object.

For example, when the trust level of the object included in the first region is equal to or higher than the prescribed threshold, the intra prediction unit 2507 executes the intra prediction process on the block corresponding to the first region. As another example, when the trust level of the object included in the first region is less than the prescribed threshold, the intra prediction unit 2507 does not execute the intra prediction process on the block corresponding to the first region. As another example, when the counter value indicating the number of objects is equal to or greater than the prescribed threshold, the intra prediction unit 2507 executes the intra prediction process on the block corresponding to the first region. As another example, when the counter value indicating the number of objects is less than the prescribed threshold, the intra prediction unit 2507 does not execute the intra prediction process on the block corresponding to the first region. As another example, when the category or feature of the object is the same as the prescribed category or feature, the intra prediction unit 2507 executes the intra prediction process on the block corresponding to the first region. As another example, when the category or feature of the object differs from the prescribed category or feature, the intra prediction unit 2507 does not execute the intra prediction process on the block corresponding to the first region. As another example, when the boundary box exists, the intra prediction unit 2507 executes the intra prediction process on the block corresponding to the first region. As another example, when the boundary box does not exist, the intra prediction unit 2507 does not execute the intra prediction process on the block corresponding to the first region. In the above-described example, it is also possible to select an encoding-specific intra prediction mode on the basis of one or more parameters. For example, the intra prediction mode is replaced with the DC intra mode.

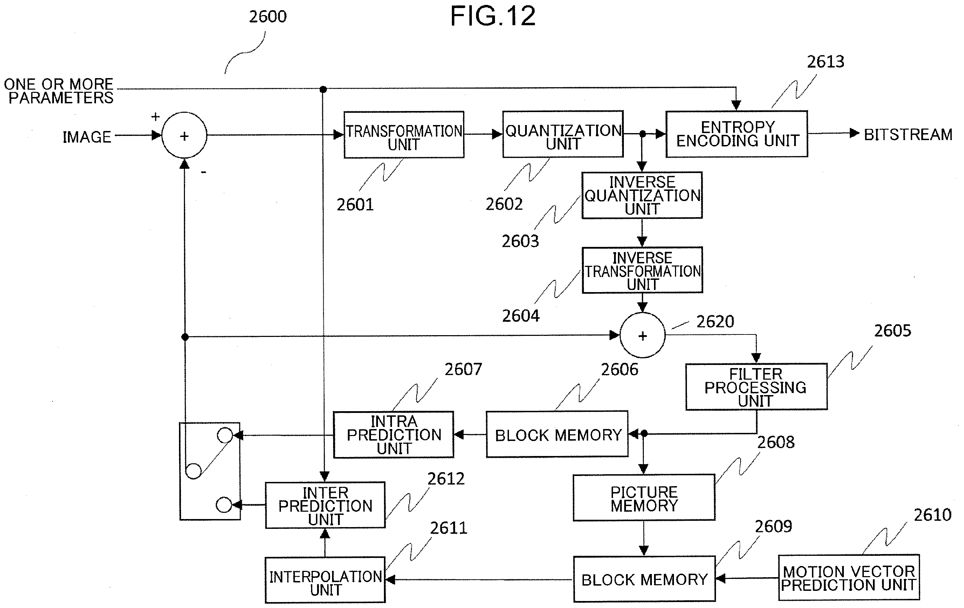

FIG. 12 is a block diagram showing a configuration example 2600 of the image encoding device 1202 according to the embodiment of the present disclosure. As shown in FIG. 12, the image encoding device 1202 includes a transformation unit 2601, a quantization unit 2602, an inverse quantization unit 2603, an inverse transformation unit 2604, a filter processing unit 2605, a block memory 2606, an intra prediction unit 2607, a picture memory 2608, a block memory 2609, a motion vector prediction unit 2610, an interpolation unit 2611, an inter prediction unit 2612, and an entropy encoding unit 2613. In the configuration example 2600, one or more parameters are input into the inter prediction unit 2612 and the entropy encoding unit 2413.

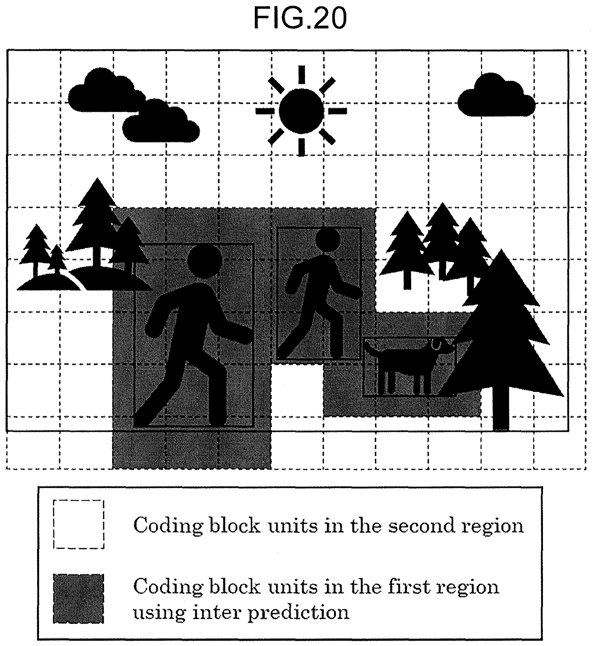

FIG. 20 is a diagram showing a setting example of the prediction process. On the basis of one or more input parameters, the inter prediction unit 2612 does not execute the prediction process on the block corresponding to the second region of the image that does not include the object, and executes the inter prediction process on the block corresponding to the first region of the image including the object.

For example, when the trust level of the object included in the first region is equal to or higher than the prescribed threshold, the inter prediction unit 2612 executes the inter prediction process on the block corresponding to the first region. As another example, when the trust level of the object included in the first region is less than the prescribed threshold, the inter prediction unit 2612 does not execute the inter prediction process on the block corresponding to the first region. As another example, when the counter value indicating the number of objects is equal to or greater than the prescribed threshold, the inter prediction unit 2612 executes the inter prediction process on the block corresponding to the first region. As another example, when the counter value indicating the number of objects is less than the prescribed threshold, the inter prediction unit 2612 does not execute the inter prediction process on the block corresponding to the first region. As another example, when the category or feature of the object is the same as the prescribed category or feature, the inter prediction unit 2612 executes the inter prediction process on the block corresponding to the first region. As another example, when the category or feature of the object differs from the prescribed category or feature, the inter prediction unit 2612 does not execute the inter prediction process on the block corresponding to the first region. As another example, when the boundary box exists, the inter prediction unit 2612 executes the inter prediction process on the block corresponding to the first region. As another example, when the boundary box does not exist, the inter prediction unit 2612 does not execute the inter prediction process on the block corresponding to the first region. In the above-described example, it is also possible to select an encoding-specific inter prediction mode on the basis of one or more parameters. For example, the inter prediction mode can be replaced with the skip prediction mode only, or cannot be replaced with the skip prediction mode.

For example, with reference to FIG. 6, when the first encoding process and the second encoding process include the arithmetic encoding process, the entropy encoding unit 2313 can set context models different for the first region and the second region on the basis of one or more input parameters.

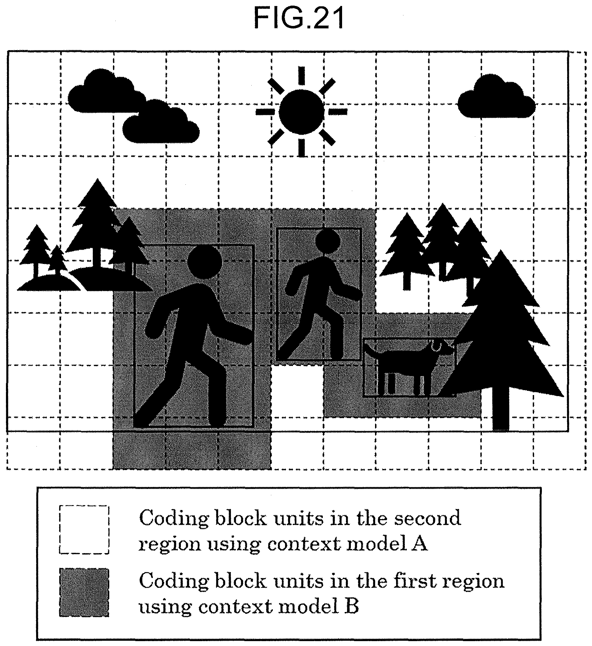

FIG. 21 is a diagram showing a setting example of the context model. The entropy encoding unit 2313 sets the context model A for the block corresponding to the second region of the image that does not include the object, and sets the context model B for the block corresponding to the first region of the image including the object.

For example, when the trust level of the object included in the first region is equal to or higher than the prescribed threshold, the entropy encoding unit 2313 sets, for the first region, the context model different from the context model for the second region. As another example, when the trust level of the object included in the first region is less than the prescribed threshold, the entropy encoding unit 2313 sets, for the first region, the context model different from the context model for the second region. As another example, when the counter value indicating the number of objects is equal to or greater than the prescribed threshold, the entropy encoding unit 2313 sets, for the first region, the context model different from the context model for the second region. As another example, when the counter value indicating the number of objects is less than the prescribed threshold, the entropy encoding unit 2313 sets, for the first region, the context model different from the context model for the second region. As another example, when the category or feature of the object is the same as the prescribed category or feature, the entropy encoding unit 2313 sets, for the first region, the context model different from the context model for the second region. As another example, when the category or feature of the object is different from the prescribed category or feature, the entropy encoding unit 2313 sets, for the first region, the context model different from the context model for the second region. As another example, when the boundary box exists, the entropy encoding unit 2313 sets, for the first region, the context model different from the context model for the second region. As another example, when the boundary box does not exist, the entropy encoding unit 2313 sets, for the first region, the context model different from the context model for the second region.

With reference to FIG. 2, in step S2004, the image encoding device 1202 may generate a pixel sample of the encoded image and output a signal including the pixel sample of the image and the one or more parameters to the first processing device. The first processing device may be the task processing unit 1201.

The first processing device executes the prescribed task process such as the neural network task by using the pixel sample of the image and one or more parameters included in the input signal. In the neural network task, at least one determination process may be executed. One example of the neural network is a convolutional neural network. Examples of the neural network task include object detection, object segmentation, object tracking, action recognition, pose estimation, pose tracking, machine-human hybrid vision, or an arbitrary combination thereof.

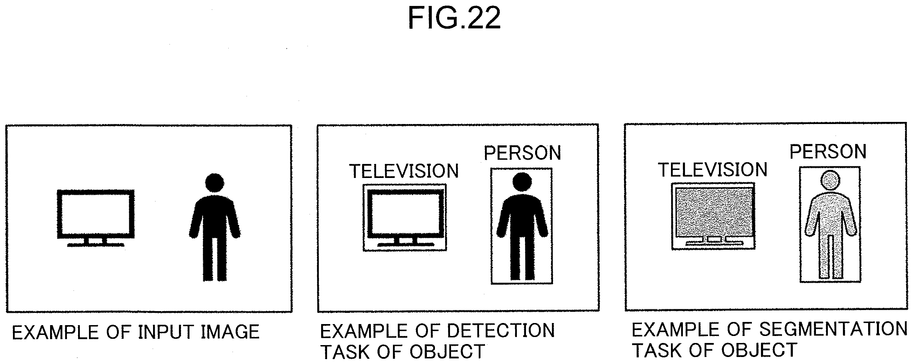

FIG. 22 is a diagram showing object detection and object segmentation as one example of the neural network task. In object detection, the attribute of the object (television and person in this example) included in the input image is detected. In addition to the attribute of the object included in the input image, the position and the number of objects in the input image may be detected. By the object detection, for example, the position of the object to be recognized may be narrowed down, or objects other than the object to be recognized may be excluded. As a specific use, for example, detection of a face in a camera and detection of a pedestrian in autonomous driving can be considered. In object segmentation, pixels in the region corresponding to the object are segmented (or partitioned). By the object segmentation, for example, uses such as separating obstacles and roads in autonomous driving to provide assistance to safe traveling of a car, detecting product defects in a factory, and identifying terrain in a satellite image can be considered.

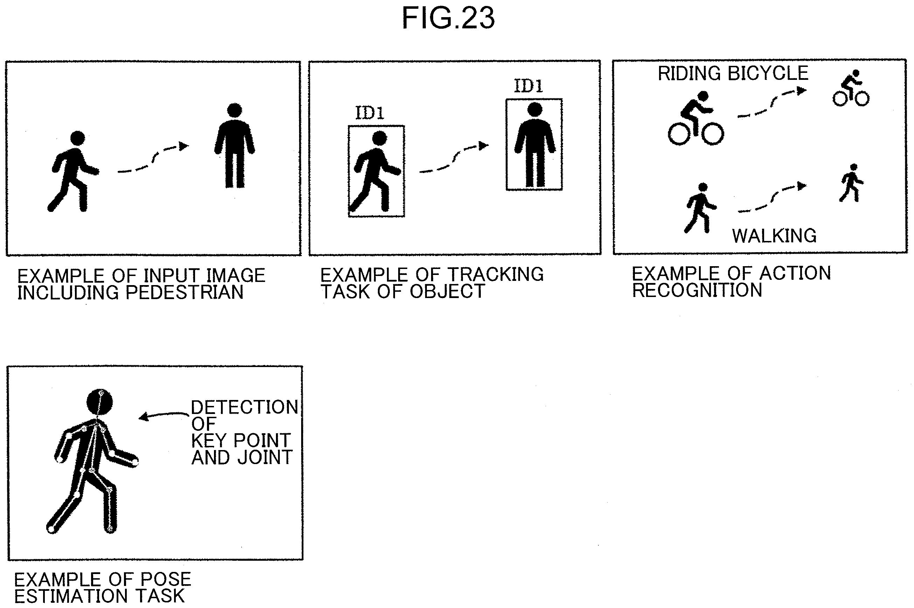

FIG. 23 is a diagram showing object tracking, action recognition, and pose estimation as one example of the neural network task. In object tracking, movement of the object included in the input image is tracked. As a use, for example, counting the number of users in a shop or other facilities and analyzing motion of an athlete can be considered. Faster processing will enable real-time object tracking and application to camera processing such as autofocus. In action recognition, the type of action of the object (in this example, "riding a bicycle" and "walking") is detected. For example, by the use for a security camera, application to prevention and detection of criminal behavior such as robbery and shoplifting, and to prevention of forgetting work in a factory is possible. In pose estimation, the posture of the object is detected by key point and joint detection. For example, usage in an industrial field such as improving work efficiency in a factory, a security field such as detection of abnormal behavior, and healthcare and sports fields can be considered.

The first processing device outputs a signal indicating execution results of the neural network task. The signal may include at least one of the number of detected objects, the trust level of the detected objects, boundary information or location information on the detected objects, and the classification category of the detected objects. The signal may be input into the image encoding device 1202 from the first processing device.

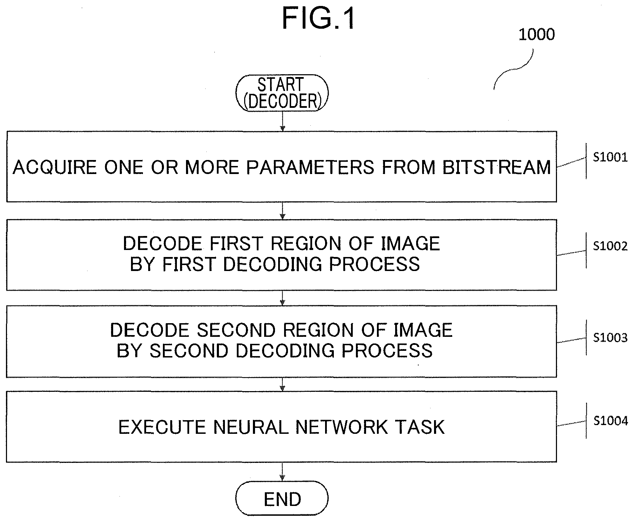

FIG. 1 is a flowchart showing a processing procedure 1000 of the image decoding method according to the embodiment of the present disclosure. With reference to FIGS. 1 and 4, the image decoding device 1203 receives the bitstream transmitted from the image encoding device 1202 and acquires one or more parameters from the bitstream (step S1001). On the basis of the acquired one or more parameters, the image decoding device 1203 decodes the first region of the image including the object by the first decoding process (step S1002), and decodes the second region of the image that does not include the object by the second decoding process (step S 1003). The image decoding device 1203 inputs the process result R1 including the extended image and the one or more parameters into the task processing unit 1204 that serves as the second processing device. The image decoding device 1203 outputs the decoded image to the display device, and the display device displays the image.

The task processing unit 1204 executes the prescribed task process such as the neural network task on the basis of the input image and the process result R1 (step S 1004). The task processing unit 1204 executes, for example, a person identification process to identify a person on the basis of the person's face included in the image, and outputs the process result R2.

FIGS. 15 and 16 are diagrams showing an example of the first region and the second region. The image decoding device 1203 sets a region including the object set with one or more parameters as the first region, and sets a region that does not include the object as the second region.

The first decoding process and the second decoding process include at least one of the quantization process, the filtering process, the intra prediction process, the inter prediction process, and the arithmetic encoding process. The image decoding device 1203 sets the first decoding process and the second decoding process such that the first region has higher image quality or higher resolution than the second region.

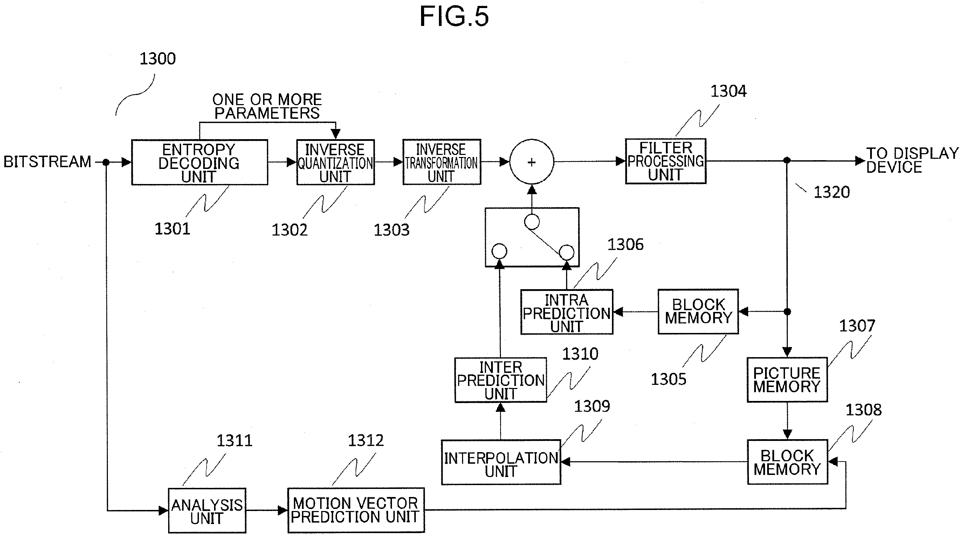

FIG. 5 is a block diagram showing a configuration example 1300 of the image decoding device 1203 according to the embodiment of the present disclosure. The image decoding device 1203 is configured to decode the input bitstream block by block and output the decoded image. As shown in FIG. 5, the image decoding device 1203 includes an entropy decoding unit 1301, an inverse quantization unit 1302, an inverse transformation unit 1303, a filter processing unit 1304, a block memory 1305, an intra prediction unit 1306, a picture memory 1307, a block memory 1308, an interpolation unit 1309, an inter prediction unit 1310, an analysis unit 1311, and a motion vector prediction unit 1312.

Next, an exemplary operation flow will be described. The encoded bitstream input into the image decoding device 1203 is input into the entropy decoding unit 1301. The entropy decoding unit 1301 decodes the input bitstream and inputs the frequency coefficient, which is a decoded value, into the inverse quantization unit 1302. The entropy decoding unit 1301 acquires one or more parameters from the bitstream and inputs the acquired one or more parameters into the inverse quantization unit 1302. The inverse quantization unit 1302 inversely quantizes the frequency coefficient input from the entropy decoding unit 1301, and inputs the frequency coefficient after inverse quantification into the inverse transformation unit 1303. The inverse transformation unit 1303 generates the difference image by inversely transforming the frequency coefficient, and inputs the difference image into the adder. The adder adds the difference image input from the inverse transformation unit 1303 and the predicted image input from the intra prediction unit 1306 or the inter prediction unit 1310. The adder inputs an additional value 1320 corresponding to the input image into the filter processing unit 1304. The filter processing unit 1304 executes the prescribed filter process on the additional value 2320, and inputs the image after the filter process to the block memory 1305 and the picture memory 1307 for further prediction. The filter processing unit 1304 inputs the image after the filter process into the display device, and the display device displays the image.

The analysis unit 1311 inputs some prediction information, for example, a block of the residual sample, a reference index indicating reference picture used, and a delta motion vector, to the motion vector prediction unit 1312 by parsing the input bitstream. The motion vector prediction unit 1312 predicts the motion vector of the current block on the basis of the prediction information input from the analysis unit 1311. The motion vector prediction unit 1312 inputs a signal indicating the predicted motion vector into the block memory 1308.

The intra prediction unit 1306 and the inter prediction unit 1310 search a reconstructed image stored in the block memory 1305 or the picture memory 1307 for an image region that is most similar to the input image for prediction. The block memory 1308 fetches the block of the reconstructed image from the picture memory 1307 by using the motion vector input from the motion vector prediction unit 1312. The block memory 1308 inputs the block of the reconstructed image into the interpolation unit 1309 for the interpolation process. The interpolated image is input from the interpolation unit 1309 into the inter prediction unit 1310 for the inter prediction process.

In the configuration example 1300, one or more parameters are input into the inverse quantization unit 1302.

For example, when the trust level of the object included in the first region is equal to or higher than the prescribed threshold, the inverse quantization unit 1302 sets the quantization parameter with a value different from a value of the quantization parameter about the second region to the first region. As another example, when the trust level of the object included in the first region is less than the prescribed threshold, the inverse quantization unit 1302 sets the quantization parameter with a value different from a value of the quantization parameter about the second region to the first region. As another example, when the counter value indicating the number of objects is equal to or higher than the prescribed threshold, the inverse quantization unit 1302 sets the quantization parameter with a value different from a value of the quantization parameter about the second region to the first region. As another example, when the counter value indicating the number of objects is less than the prescribed threshold, the inverse quantization unit 1302 sets the quantization parameter with a value different from a value of the quantization parameter about the second region to the first region. As another example, when the category or feature of the object is identical to the prescribed category or feature, the inverse quantization unit 1302 sets the quantization parameter with a value different from a value of the quantization parameter about the second region to the first region. As another example, when the category or feature of the object is different from the prescribed category or feature, the inverse quantization unit 1302 sets the quantization parameter with a value different from a value of the quantization parameter about the second region to the first region. As another example, when the boundary box exists, the inverse quantization unit 1302 sets the quantization parameter with a value different from a value of the quantization parameter about the second region to the first region. As another example, when the boundary box does not exist, the inverse quantization unit 1302 sets the quantization parameter with a value different from a value of the quantization parameter about the second region to the first region.

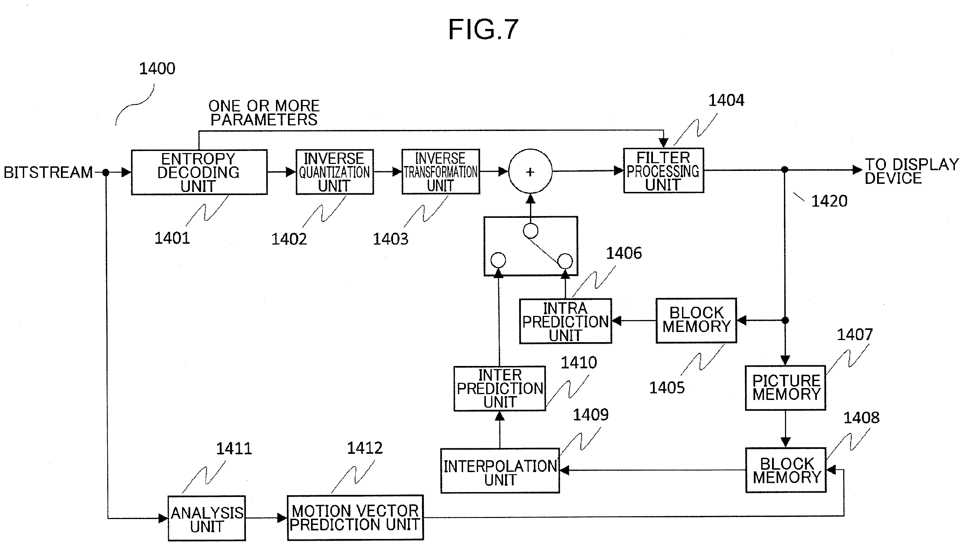

FIG. 7 is a block diagram showing a configuration example 1400 of the image decoding device 1203 according to the embodiment of the present disclosure. As shown in FIG. 7, the image decoding device 1203 includes an entropy decoding unit 1401, an inverse quantization unit 1402, an inverse transformation unit 1403, a filter processing unit 1404, a block memory 1405, an intra prediction unit 1406, a picture memory 1407, a block memory 1408, an interpolation unit 1409, an inter prediction unit 1410, an analysis unit 1411, and a motion vector prediction unit 1412.

In the configuration example 1400, one or more parameters are input into the filter processing unit 1404.

For example, when the trust level of the object included in the first region is equal to or higher than the prescribed threshold, the filter processing unit 1404 applies, to the first region, settings different from settings of the filter strength, the filter length, or enabling/disabling the filter process about the second region. As another example, when the trust level of the object included in the first region is less than the prescribed threshold, the filter processing unit 1404 applies, to the first region, settings different from settings of the filter strength, the filter length, or enabling/disabling the filter process about the second region. As another example, when the counter value indicating the number of objects is equal to or greater than the prescribed threshold, the filter processing unit 1404 applies, to the first region, settings different from settings of the filter strength, the filter length, or enabling/disabling the filter process about the second region. As another example, when the counter value indicating the number of objects is less than the prescribed threshold, the filter processing unit 1404 applies, to the first region, settings different from settings of the filter strength, the filter length, or enabling/disabling the filter process about the second region. As another example, when the category or feature of the object is the same as the prescribed category or feature, the filter processing unit 1404 applies, to the first region, settings different from settings of the filter strength, the filter length, or enabling/disabling the filter process about the second region. As another example, when the category or feature of the object differs from the prescribed category or feature, the filter processing unit 1404 applies, to the first region, settings different from settings of the filter strength, the filter length, or enabling/disabling the filter process about the second region. As another example, when the boundary box exists, the filter processing unit 1404 applies, to the first region, settings different from settings of the filter strength, the filter length, or enabling/disabling the filter process about the second region. As another example, when the boundary box does not exist, the filter processing unit 1404 applies, to the first region, settings different from settings of the filter strength, the filter length, or enabling/disabling the filter process about the second region.

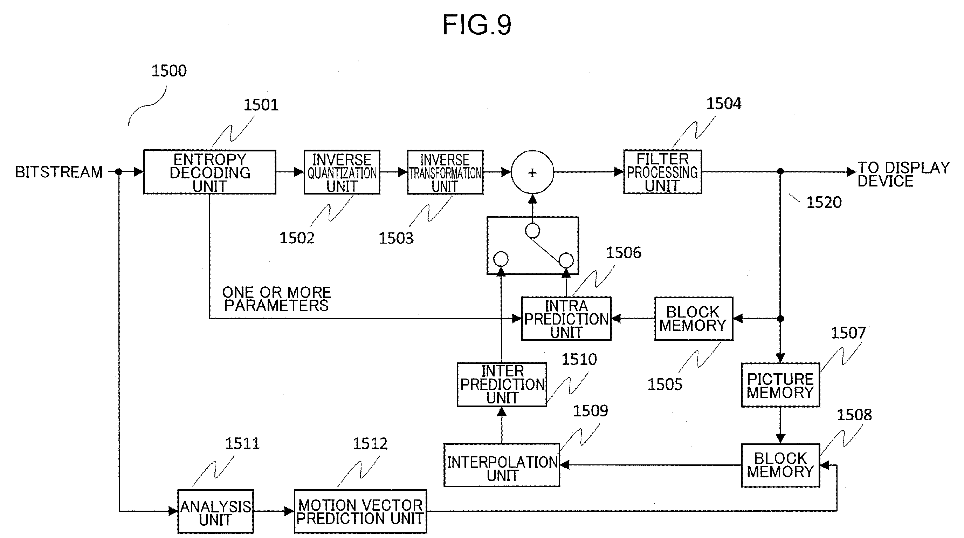

FIG. 9 is a block diagram showing a configuration example 1500 of the image decoding device 1203 according to the embodiment of the present disclosure. As shown in FIG. 9, the image decoding device 1203 includes an entropy decoding unit 1501, an inverse quantization unit 1502, an inverse transformation unit 1503, a filter processing unit 1504, a block memory 1505, an intra prediction unit 1506, a picture memory 1507, a block memory 1508, an interpolation unit 1509, an inter prediction unit 1510, an analysis unit 1511, and a motion vector prediction unit 1512.

In the configuration example 1500, one or more parameters are input into the intra prediction unit 1506.

For example, when the trust level of the object included in the first region is equal to or higher than the prescribed threshold, the intra prediction unit 1506 executes the intra prediction process on the block corresponding to the first region. As another example, when the trust level of the object included in the first region is less than the prescribed threshold, the intra prediction unit 1506 does not execute the intra prediction process on the block corresponding to the first region. As another example, when the counter value indicating the number of objects is equal to or greater than the prescribed threshold, the intra prediction unit 1506 executes the intra prediction process on the block corresponding to the first region. As another example, when the counter value indicating the number of objects is less than the prescribed threshold, the intra prediction unit 1506 does not execute the intra prediction process on the block corresponding to the first region. As another example, when the category or feature of the object is the same as the prescribed category or feature, the intra prediction unit 1506 executes the intra prediction process on the block corresponding to the first region. As another example, when the category or feature of the object differs from the prescribed category or feature, the intra prediction unit 1506 does not execute the intra prediction process on the block corresponding to the first region. As another example, when the boundary box exists, the intra prediction unit 1506 executes the intra prediction process on the block corresponding to the first region. As another example, when the boundary box does not exist, the intra prediction unit 1506 does not execute the intra prediction process on the block corresponding to the first region.

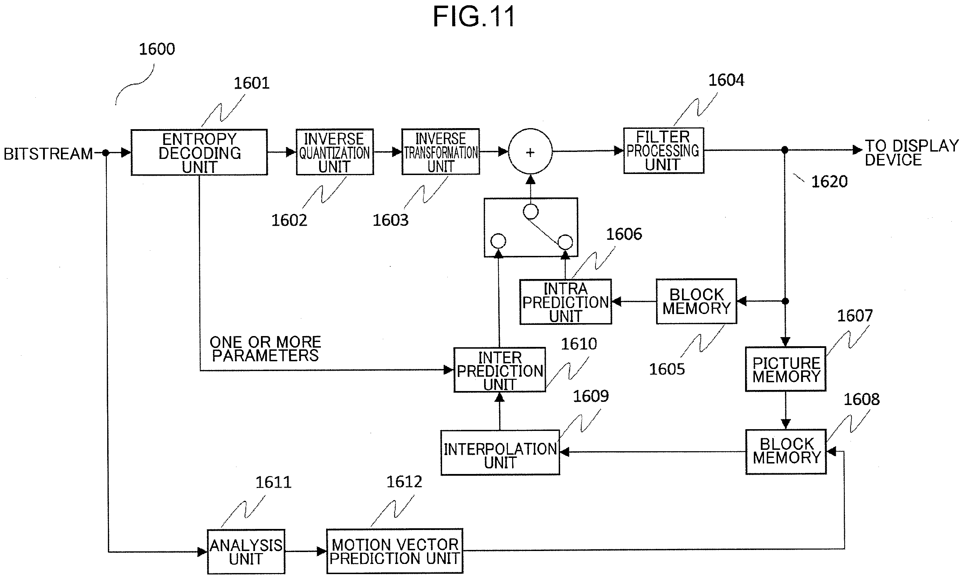

FIG. 11 is a block diagram showing a configuration example 1600 of the image decoding device 1203 according to the embodiment of the present disclosure. As shown in FIG. 11, the image decoding device 1203 includes an entropy decoding unit 1601, an inverse quantization unit 1602, an inverse transformation unit 1603, a filter processing unit 1604, a block memory 1605, an intra prediction unit 1606, a picture memory 1607, a block memory 1608, an interpolation unit 1609, an inter prediction unit 1610, an analysis unit 1611, and a motion vector prediction unit 1612.

In the configuration example 1600, one or more parameters are input into the inter prediction unit 1610.

For example, when the trust level of the object included in the first region is equal to or higher than the prescribed threshold, the inter prediction unit 1610 executes the inter prediction process on the block corresponding to the first region. As another example, when the trust level of the object included in the first region is less than the prescribed threshold, the inter prediction unit 1610 does not execute the inter prediction process on the block corresponding to the first region. As another example, when the counter value indicating the number of objects is equal to or greater than the prescribed threshold, the inter prediction unit 1610 executes the inter prediction process on the block corresponding to the first region. As another example, when the counter value indicating the number of objects is less than the prescribed threshold, the inter prediction unit 1610 does not execute the inter prediction process on the block corresponding to the first region. As another example, when the category or feature of the object is the same as the prescribed category or feature, the inter prediction unit 1610 executes the inter prediction process on the block corresponding to the first region. As another example, when the category or feature of the object differs from the prescribed category or feature, the inter prediction unit 1610 does not execute the inter prediction process on the block corresponding to the first region. As another example, when the boundary box exists, the inter prediction unit 1610 executes the inter prediction process on the block corresponding to the first region. As another example, when the boundary box does not exist, the inter prediction unit 1610 does not execute the inter prediction process on the block corresponding to the first region.

For example, with reference to FIG. 5, when the first decoding process and the second decoding process include the arithmetic encoding process, the entropy decoding unit 1301 can set the context models different for the first region and the second region, on the basis of one or more parameters acquired from the received bitstream.

For example, when the trust level of the object included in the first region is equal to or higher than the prescribed threshold, the entropy decoding unit 1301 sets, for the first region, the context model different from the context model for the second region. As another example, when the trust level of the object included in the first region is less than the prescribed threshold, the entropy decoding unit 1301 sets, for the first region, the context model different from the context model for the second region. As another example, when the counter value indicating the number of objects is equal to or greater than the prescribed threshold, the entropy decoding unit 1301 sets, for the first region, the context model different from the context model for the second region. As another example, when the counter value indicating the number of objects is less than the prescribed threshold, the entropy decoding unit 1301 sets, for the first region, the context model different from the context model for the second region. As another example, when the category or feature of the object is the same as the prescribed category or feature, the entropy decoding unit 1301 sets, for the first region, the context model different from the context model for the second region. As another example, when the category or feature of the object is different from the prescribed category or feature, the entropy decoding unit 1301 sets, for the first region, the context model different from the context model for the second region. As another example, when the boundary box exists, the entropy decoding unit 1301 sets, for the first region, the context model different from the context model for the second region. As another example, when the boundary box does not exist, the entropy decoding unit 1301 sets, for the first region, a context model different from a context model for the second region.

With reference to FIG. 1, in step S1004, the image decoding device 1203 may generate a pixel sample of the decoded image and output the process result R1 including the pixel sample of the image and the one or more parameters to the task processing unit 1204, which is the second processing device.

The task processing unit 1204 executes the prescribed task process such as the neural network task by using the pixel sample of the image and the one or more parameters included in the input signal. In the neural network task, at least one determination process may be executed. One example of the neural network is a convolutional neural network. Examples of the neural network task include object detection, object segmentation, object tracking, action recognition, pose estimation, pose tracking, machine-human hybrid vision, or an arbitrary combination thereof.

According to the present embodiment, on the basis of the one or more parameters input from the task processing unit 1201, the image encoding device 1202 encodes the first region including the object by the first encoding process, and encodes the second region that does not include the object by the second encoding process. With this configuration, the image encoding device 1202 can set the first encoding process and the second encoding process such that the first region has higher image quality or higher resolution than the second region, and the image decoding device 1203 can output, to the task processing unit 1204, an image in which the first region has higher image quality or higher resolution than the second region. As a result, it is possible to improve accuracy of the task process in the task processing unit 1204.

### Industrial Applicability

The present disclosure is particularly useful for application to the image processing system including an encoder transmitting images and a decoder receiving images.

## Claims

1. An image encoding method comprising, by an image encoding device:
encoding a first region of an image including an object by a first encoding process on a basis of one or more parameters about the object included in the image, the parameters being input from a first processing device that executes a prescribed task process on a basis of the image;
encoding a second region of the image that does not include the object by a second encoding process on a basis of the one or more parameters;
generating a bitstream by encoding the first region and the second region; and
transmitting the generated bitstream to an image decoding device.

2. The image encoding method according to claim 1, wherein the image encoding device adds the one or more parameters to the bitstream and transmits the bitstream to the image decoding device.

3. The image encoding method according to claim 2, wherein the image encoding device further adds, to the bitstream, control information indicating whether the one or more parameters are added to the bitstream, and transmits the bitstream to the image decoding device.

4. The image encoding method according to any one of claims 1 to 3, wherein
the image decoding device receives the bitstream from the image encoding device,
acquires the one or more parameters from the received bitstream, and
decodes the first region by a first decoding process and decodes the second region by a second decoding process on a basis of the acquired one or more parameters.

5. The image encoding method according to claim 4, wherein the image decoding device outputs the acquired one or more parameters to a second processing device that executes a prescribed task process.

6. The image encoding method according to any one of claims 1 to 5, wherein the first encoding process and the second encoding process include at least one of a quantization process, a filtering process, an intra prediction process, an inter prediction process, and an arithmetic encoding process.

7. The image encoding method according to claim 6, wherein the image encoding device sets the first encoding process and the second encoding process such that the first region has higher image quality or higher resolution than the second region.

8. The image encoding method according to claim 6 or 7, wherein
the first encoding process and the second encoding process include the quantization process, and
the image encoding device sets a value of a first quantization parameter about the first encoding process to be smaller than a value of a second quantization parameter about the second encoding process.

9. The image encoding method according to any one of claims 1 to 8, wherein the one or more parameters include at least one of a trust level value of a neural network task that is the prescribed task process, a counter value indicating a number of the object included in the image, category information indicating an attribute of the object included in the image, feature information indicating a feature of the object included in the image, and boundary information indicating a boundary surrounding the object included in the image.

10. An image decoding method comprising, by an image decoding device:
receiving a bitstream from an image encoding device;
acquiring one or more parameters about an object included in an image from the bitstream; and
decoding a first region of the image including the object by a first decoding process, and decoding a second region of the image that does not include the object by a second decoding process on a basis of the acquired one or more parameters.

11. An image processing method comprising, by an image decoding device:
receiving, from an image encoding device, a bitstream including an encoded image and one or more parameters about an object included in the image;
acquiring the one or more parameters from the received bitstream; and
decoding a first region of the image including the object by a first decoding process, and decoding a second region of the image that does not include the object by a second decoding process on a basis of the acquired one or more parameters.

12. An image encoding device configured to:
encode a first region of an image including an object by a first encoding process on a basis of one or more parameters about the object included in the image, the parameters being input from a first processing device that executes a prescribed task process on a basis of the image;
encode a second region of the image that does not include the object by a second encoding process on a basis of the one or more parameters;
generate a bitstream by encoding the first region and the second region; and
transmit the generated bitstream to an image decoding device.

13. An image decoding device configured to:
receive a bitstream from an image encoding device;
acquire one or more parameters about an object included in an image from the bitstream; and
decode a first region of the image including the object by a first decoding process, and decode a second region of the image that does not include the object by a second decoding process on a basis of the acquired one or more parameters.
